# EUROPÄISCHE PATENTSCHRIFT

(11) **EP 2 507 536 B1**
(45) Veröffentlichungstag und Bekanntmachung des Hinweises auf die Patenterteilung: **11.09.2013**
(21) Anmeldenummer: 10779804.3
(22) Anmeldetag: 17.11.2010
(51) Int. Cl.: F16H 63/32

(54) **SCHALTELEMENT FÜR EIN SCHALTGETRIEBE**
SHIFTING ELEMENT FOR A MANUAL TRANSMISSION
ÉLÉMENT DE COMMANDE POUR UNE BOÎTE DE VITESSE

(30) Priorität: 30.11.2009 DE 102009056299
(43) Veröffentlichungstag der Anmeldung: 10.10.2012
(73) Patentinhaber: Schaeffler Technologies AG & Co. KG, 91074 Herzogenaurach (DE)
(72) Erfinder: FEUERBACH, Matthias, 97070 Würzburg (DE); KRÄMER, Klaus, 91438 Lenkersheim (DE); LÖFFELMANN, Jochen, 91330 Eggolsheim (DE)
(86) Internationale Anmeldenummer: PCT/EP2010/067665
(87) Internationale Veröffentlichungsnummer: WO 2011/064127

(56) Entgegenhaltungen:
- EP-A1- 0 878 646
- EP-A2- 1 258 660
- EP-A2- 1 548 335
- DE-A1- 10 360 719
- DE-A1-102006 004 933
- DE-A1-102007 027 788
- DE-A1-102007 050 571

## Beschreibung

### Gebiet der Erfindung

Die Erfindung betrifft ein Schaltelement für ein Schaltgetriebe, das eine Schaltgabel und ein Schaltmaul umfasst, die als separate Teile gefertigt sind.

### Hintergrund der Erfindung

Ein Schaltelement der gattungsgemäßen Art ist beispielsweise in DE 10 2007 050 571 A1, DE 103 60 719 A1, EP 1 258 660 A2, EP 0878646 A1 oder DE 10 2006 004 933 A1 offenbart. Es wird benötigt, um in einem Zahnradwechselgetriebe einen Gangwechsel vorzunehmen. Sowohl in manuellen als auch in automatisierten Getrieben sind zwischen zwei Gangrädern, die drehbar auf einer Getriebewelle gelagert sind, ein Synchronkörper und eine Schiebemuffe angeordnet. Die Schiebemuffe ist mit einer Innenverzahnung versehen, die in eine in den Synchronkörper eingebrachte Außenverzahnung eingreift. Der Synchronkörper ist drehfest mit der Getriebewelle verbunden.

Beim Schalten eines Ganges wird die Schiebemuffe in axialer Richtung auf eines der Gangräder zu verschoben, bis ihre Innenverzahnung in eine am Gangrad angebrachte Kupplungsverzahnung eingreift. Die Innenverzahnung der Schiebemuffe steht dann sowohl mit der Kupplungsverzahnung als auch mit der Außenverzahnung des Synchronkörpers in Eingriff. Das Schaltelement hat dabei die Aufgabe, die axiale Bewegung von einem Schaltgestänge auf die Schiebemuffe zu übertragen, wozu die Schaltgabel axial verschiebbar auf einer Schaltwelle bzw. auf einer Schaltstange gelagert ist und mit Mitnehmern in eine Führungsnut der Schiebemuffe eingreift.

Um einen zuverlässigen und komfortablen Schaltvorgang vornehmen zu können, muss die Schaltgabel und das Schaltmaul des Schaltelements möglichst genau in der vorgesehenen Position gehalten werden. Demgemäß wirken sich Fertigungstoleranzen negativ auf den Schaltvorgang und dessen Komfort aus. Es ist in diesem Zusammenhang bereits bekannt geworden, das Schaltelement einer Nachbearbeitung zu unterziehen (Nachfräsen), um die benötigte Präzision zu erreichen; dies zieht allerdings entsprechend hohe Kosten nach sich.

Die oben genannte DE 10 2007 050 571 A1 sieht vor, die Schaltgabeleinheit mit der Schaltgabel mit einer Verbindungseinheit zu verbinden, die so ausgebildet ist, dass die Schalteinheit positionierbar in Bezug auf die Schaltgabel fixiert werden kann. Hierzu ist eine Schraubenverbindung vorgesehen. Nachteilig ist dabei, dass die Einstellmöglichkeiten nur sehr begrenzt sind und im übrigen nur in einer Richtung gegeben sind.

### Aufgabe der Erfindung

Der vorliegenden Erfindung liegt daher die **Aufgabe** zugrunde, ein Schaltelement der eingangs genannten Art so fortzubilden, dass es möglich wird, in einfacher und kostengünstiger Weise eine umfassende Einstellbarkeit des Elements zu erreichen, so dass enge Toleranzen für die Lage der beteiligten Abschnitte des Schaltelements eingehalten werden können.

### Zusammenfassung der Erfindung

Die **Lösung** dieser Aufgabe durch die Erfindung ist dadurch gekennzeichnet, dass das Schaltelement weiterhin einen Halter aufweist, an dem die Schaltgabel und das Schaltmaul an beabstandeten Stellen befestigt sind, wobei die Befestigung durch je eine Schraubverbindung verwirklicht ist. Der Halter hat zwei ebene Anlageflächen für die Schaltgabel und für das Schaltmaul. Die beiden Anlageflächen bilden Ebenen, die sich unter einem Winkel schneiden.

Jede Schraubverbindung kann dabei durch je eine, zwei oder drei Schrauben verwirklicht werden. Besonders bevorzugt sind zwei Schrauben, da sie den optimalen Kompromiss zwischen guter Befestigung und Herstellungs- und Montageaufwand bedeuten.

Die Schaltgabel kann aus einem im wesentlichen ebenen Blech bestehen und eine Durchgangsbohrung für mindestens eine Schraube aufweisen. Dabei kann die Durchgangsbohrung zum Durchmesser des Schraubenschafts so toleriert sein, dass Spiel in radiale Richtung des Schraubenschafts besteht. Das Spiel beträgt bevorzugt 0,5 mm bis 1,5 mm. Hiermit ist es möglich, die Schaltgabel relativ zum Halter einstellbar festzulegen, und zwar im Rahmen des Spiels, das zwischen der Durchgangsbohrung und dem Schraubenschaft besteht.

Auch das Schaltmaul kann einen im wesentlichen eben ausgebildeten Anlageabschnitt zur Anlage am Halter aufweisen, wobei der Anlageabschnitt eine Durchgangsbohrung für mindestens eine Schraube aufweist. Die Durchgangsbohrung zum Durchmesser des Schraubenschafts ist dabei bevorzugt auch hier so toleriert, dass Spiel in radiale Richtung des Schraubenschafts besteht; das Spiel beträgt auch hier wieder bevorzugt 0,5 mm bis 1,5 mm.

Im Zusammenwirken mit den beiden Schraubenverbindungen, die das genannte Spiel aufweisen, wird damit eine Anpassbarkeit des Schaltelements dergestalt möglich, dass Toleranzen sowohl in Schalt- als auch in Wählrichtung des Schaltelements ausgeglichen werden können.

Die Kontaktflächen zwischen Schaltgabel und Halter einerseits und zwischen Schaltmaul und Halter andererseits sind jeweils ohne Formschluss ausgeführt, so dass durch die jeweiligen Schraubverbindungen eine feinfühlige Einstellbar-keit besteht. Durch die Schrauben werden die Teile relativ zueinander durch Anziehen der Schrauben relbschlüssig zueinander fixiert.

Hierzu kann vorgesehen werden, dass das Schaltelement in eine Lehre eingelegt wird, die die Bezugsflächen des Schaltelements zueinander ausrichten, wobei die Schrauben noch nicht festgezogen sind. Liegen die Bezugsflächen an den korrespondierenden Flächen der Lehre an, werden die Schrauben festgezogen, so dass das Schaltelement die genaue Soll-Form aufweist.

Durch die vorgeschlagene Ausgestaltung wird es also möglich, innerhalb gewisser Grenzen (Spiel zwischen den Schraubenschäften und den Durchgangsbohrungen) das Schaltelement einstellbar zu gestalten. Dies kann in wirtschaftlich günstiger Weise realisiert werden.

### Kurze Beschreibung der Figuren

In den Zeichnungen ist ein Ausführungsbeispiel der Erfindung dargestellt. Es zeigen:
- Fig. 1: in der Vorderansicht ein Schaltelement für ein Schaltgetriebe,
- Fig. 2: in der Vorderansicht einen Halter des Schaltelements gemäß Fig. 1 und
- Fig. 3: in perspektivischer Darstellung das Schaltelement gemäß Fig. 1 und Fig. 2.

### Ausführliche Beschreibung der Figuren

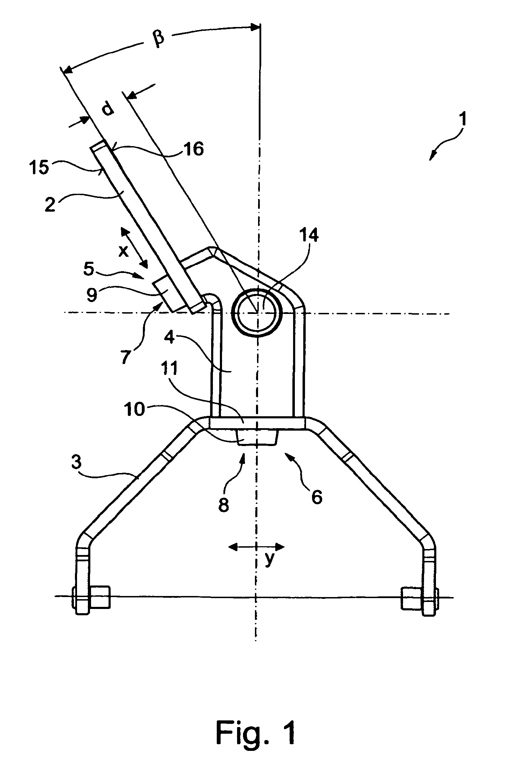

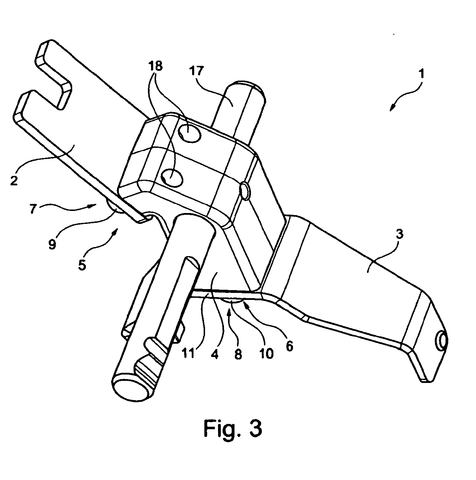

In Fig. 1 und Fig. 3 ist ein Schaltelement 1 dargestellt, das zur Ausführung eines Schaltvorgangs in einem Zahnradwechselgetriebe in bekannter Weise eingesetzt wird. Es wird diesbezüglich exemplarisch auf die DE 103 60 719 A1 der Anmelderin Bezug genommen.

Das Schaltelement 1 hat im wesentlichen drei Hauptkomponenten:

Ein Halter 4 stellt den Grundkörper des Schaltelements 1 dar. Eine Schaltgabel 2 ist zum Eingriff eines Betätigungselements ausgebildet, um das Schaltelement 1 zur Durchführung des Schaltvorgangs zu bewegen. Hierzu ist das Schaltelement durch eine Lagerbuchse 14 auf einer in Fig. 3 dargestellten Welle 17 gelagert, die sich senkrecht zur Zeichenebene in Fig. 1 erstreckt. Am Halter 4 ist weiterhin ein Schaltmaul 3 angeordnet, das das axial zu verschiebende Zahnrad greift und bewegt.

Dabei ist an einer ersten Stelle 5 am Halter 4 die Schaltgabel 2 befestigt, und zwar mittels einer Schraubverbindung 7, die zwei Schrauben 9 aufweist (in Fig. 3 sind zwei korrespondierende Ausnehmungen 18 im Halter 4 zu erkennen, die durch die Herstellung der Gewindeabschnitte für die Schrauben 9 im Halter 4 entstanden sind).

An einer zweiten Stelle 6 ist das Schaltmaul 3 am Halter 4 befestigt, und zwar mittels einer Schraubverbindung 8, die wiederum zwei Schrauben 10 aufweist. Zum Durchtritt der Schrauben 9 und 10 sind in der Schaltgabel 2 bzw. im Schaltmaul 3 nicht näher dargestellte Durchgangsbohrungen eingearbeitet, die vom Schaft der Schrauben 9, 10 durchsetzt werden.

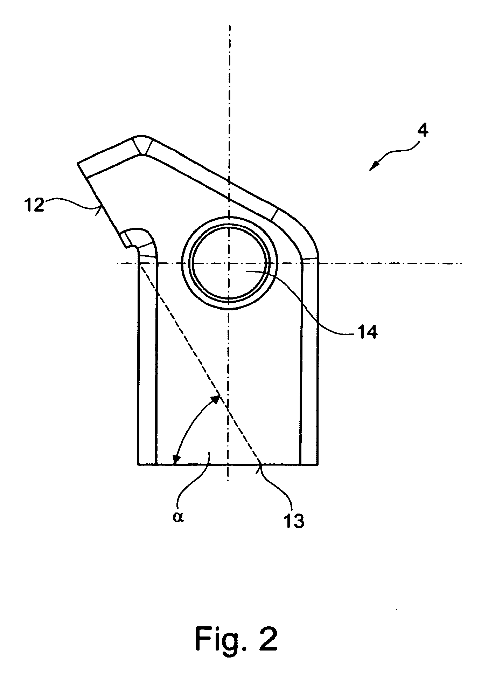

Hierfür weist - was in Fig. 2 gut zu erkennen ist - der Halter 4 zwei ebene Anlageflächen 12 und 13 auf. An der Anlagefläche 12 wird die aus einem flachen Blech bestehende Schaltgabel 2 angelegt und mit den Schrauben 9 fixiert. An der Anlagefläche 13 wird ein Anlageabschnitt 11 des Schaltmauls 3 (s. Fig. 1) angelegt und mit den Schrauben 10 fixiert. Wie in Fig. 2 angedeutet ist, schneiden sich die Ebenen, die in den Anlageflächen 12 und 13 liegen, unter einem Winkel α.

Wichtige Maße, die im Betrieb des Schaltelements 1 möglichst genau eingehalten werden müssen, ist der Winkel β (s. Fig. 1, die Winkel α und β ergeben vorliegend zusammen 90°) sowie der Abstand d der Schaltgabel 2 von der Mitte der Lagerbuchse 14. Von Relevanz sind auch die Lage der Fase 15 der Schaltgabel 2 sowie deren Fläche 16 relativ zur Lagerbuchse 14 und zum Schaltmaul 3.

Durch die vorgeschlagene Ausgestaltung ergibt sich, dass die Schaltgabel 2 relativ zum Halter 4 in Verschieberichtung x im Rahmen des Spiels, das zwischen der Durchgangsbohrung und dem Schraubenschaft der Schrauben 9 besteht, beweglich einstellbar ist.

Analog ist es möglich, dass das Schaltmaul 3 relativ zum Halter 4 in Verschieberichtung y im Rahmen des Spiels, das zwischen der Durchgangsbohrung und dem Schraubenschaft der Schrauben 10 besteht, beweglich einstellbar ist.

Demgemäß kann eine Anpassung im Rahmen der genannten Spiele in den Verschieberichtungen x und y so erfolgen, dass eine möglichst genaue Ist-Position der Bauteile erreicht werden kann. Mit der genannten Verstellmöglichkeit können auch andere Fehler ausgeglichen werden, z. B. Unebenheiten des Schaltmauls, Positionsfehler des Halters 4 bezüglich der Anschraubfläche des Schaltmauls und Positionsfehler an der Schaltgabel.

### Bezugszeichenliste

- 1: Schaltelement
- 2: Schaltgabel
- 3: Schaltmaul
- 4: Halter
- 5: Stelle
- 6: Stelle
- 7: Schraubverbindung
- 8: Schraubverbindung
- 9: Schraube
- 10: Schraube
- 11: Anlageabschnitt
- 12: Anlagefläche
- 13: Anlagefläche
- 14: Lagerbuchse
- 15: Fase
- 16: Fläche
- 17: Welle
- 18: Ausnehmung

- α: Winkel
- β: Winkel
- x: Verschieberichtung
- y: Verschieberichtung
- d: Abstand

## Patentansprüche

1. Schaltelement (1) für ein Schaltgetriebe, das eine Schaltgabel (2) und ein Schaltmaul (3) umfasst, die als separate Teile gefertigt sind, **dadurch gekennzeichnet, dass** das Schaltelement (1) weiterhin einen Halter (4) aufweist, an dem die Schaltgabel (2) und das Schaltmaul (3) an beabstandeten Stellen (5, 6) befestigt sind, wobei die Befestigung durch je eine Schraubverbindung (7, 8) verwirklicht ist, wobei der Halter (4) zwei ebene Anlageflächen (12, 13) für die Schaltgabel (2) und für das Schaltmaul (3) aufweist und die beiden Anlageflächen (12, 13) Ebenen bilden, die sich unter einem Winkel (α) schneiden.

2. Schaltelement nach Anspruch 1, **dadurch gekennzeichnet, dass** jede Schraubverbindung (7, 8) durch je eine, zwei oder drei Schrauben (9, 10) verwirklicht ist.

3. Schaltelement nach Anspruch 1, **dadurch gekennzeichnet, dass** die Schaltgabel (2) aus einem im wesentlichen ebenen Blech besteht und eine Durchgangsbohrung für mindestens eine Schraube (9) aufweist.

4. Schaltelement nach Anspruch 3, **dadurch gekennzeichnet, dass** die Durchgangsbohrung zum Durchmesser des Schraubenschafts so toleriert ist, dass Spiel in radiale Richtung des Schraubenschafts besteht.

5. Schaltelement nach Anspruch 4, **dadurch gekennzeichnet, dass** das Spiel 0,5 mm bis 1,5 mm beträgt.

6. Schaltelement nach Anspruch 1, **dadurch gekennzeichnet, dass** das Schaltmaul (3) einen im wesentlichen eben ausgebildeten Anlageab-schnitt (11) zur Anlage am Halter (4) aufweist, wobei der Anlageabschnitt (11) eine Durchgangsbohrung für mindestens eine Schraube (10) aufweist.

7. Schaltelement nach Anspruch 6, **dadurch gekennzeichnet, dass** die Durchgangsbohrung zum Durchmesser des Schraubenschafts so toleriert ist, dass Spiel in radiale Richtung des Schraubenschafts besteht.

8. Schaltelement nach Anspruch 7, **dadurch gekennzeichnet, dass** das Spiel 0,5 mm bis 1,5 mm beträgt.

## Claims

1. Shifting element (1) for a manual gearbox which comprises a shifting fork (2) and a shifting mouth (3) which are produced as separate parts, **characterized in that**, furthermore, the shifting element (1) has a holder (4), to which the shifting fork (2) and the shifting mouth (3) are fastened at points (5, 6) which are spaced apart, the fastening being realized by in each case one screw connection (7, 8), the holder (4) having two planar bearing faces (12, 13) for the shifting fork (2) and for the shifting mouth (3), and the two bearing faces (12, 13) forming planes which intersect at an angle (α).

2. Shifting element according to Claim 1, **characterized in that** each screw connection (7, 8) is realized by in each case one, two or three screws (9, 10).

3. Shifting element according to Claim 1, **characterized in that** the shifting fork (2) comprises a substantially planar metal sheet and has a through hole for at least one screw (9).

4. Shifting element according to Claim 3, **characterized in that** the through hole has such a tolerance with respect to the diameter of the screw shank that there is play in the radial direction of the screw shank.

5. Shifting element according to Claim 4, **characterized in that** the play is from 0.5 mm to 1.5 mm.

6. Shifting element according to Claim 1, **characterized in that** the shifting mouth (3) has a bearing section (11) of substantially planar configuration for bearing against the holder (4), the bearing section (11) having a through hole for at least one screw (10).

7. Shifting element according to Claim 6, **characterized in that** the through hole has such a tolerance with respect to the diameter of the screw shank that there is play in the radial direction of the screw shank.

8. Shifting element according to Claim 7, **characterized in that** the play is from 0.5 mm to 1.5 mm.

## Revendications

1. Elément de commande (1) pour une boîte de vitesses, qui comprend une fourchette de commande (2) et une mâchoire de commande (3), qui est fabriquée en une pièce séparée, **caractérisé en ce que** l'élément de commande (1) présente en outre un support (4), sur lequel la fourchette de commande (2) et la mâchoire de commande (3) sont fixées en des endroits espacés (5, 6), dans lequel la fixation est réalisée chaque fois par un assemblage vissé (7, 8), dans lequel le support (4) présente deux faces d'appui planes (12, 13) pour la fourchette de commande (2) et pour la mâchoire de commande (3) et les deux faces d'appui (12, 13) forment des plans qui se coupent sous un angle (α).

2. Elément de commande selon la revendication 1, **caractérisé en ce que** chaque assemblage vissé (7, 8) est réalisé à l'aide respectivement de une, deux ou trois vis (9, 10).

3. Elément de commande selon la revendication 1, **caractérisé en ce que** la fourchette de commande (2) se compose d'une tôle essentiellement plane et présente un alésage de passage pour au moins une vis (9).

4. Elément de commande selon la revendication 3, **caractérisé en ce que** l'alésage de passage présente une tolérance à l'égard du diamètre de la tige de vis, telle qu'il existe un jeu en direction radiale de la tige de vis.

5. Elément de commande selon la revendication 4, **caractérisé en ce que** le jeu vaut 0,5 mm à 1,5 mm.

6. Elément de commande selon la revendication 1, **caractérisé en ce que** la mâchoire de commande (3) présente une partie d'appui (11) essentiellement plane pour l'appui sur le support (4), dans lequel la partie d'appui (11) présente un alésage de passage pour au moins une vis (10).

7. Elément de commande selon la revendication 6, **caractérisé en ce que** l'alésage de passage présente une tolérance à l'égard du diamètre de la tige de vis, telle qu'il existe un jeu en direction radiale de la tige de vis.

8. Elément de commande selon la revendication 7, **caractérisé en ce que** le jeu vaut 0,5 mm à 1,5 mm.
